# EUROPÄISCHE PATENTSCHRIFT

(11) **EP 2 602 187 B1**
(45) Veröffentlichungstag und Bekanntmachung des Hinweises auf die Patenterteilung: **06.09.2017**
(21) Anmeldenummer: 12195250.1
(22) Anmeldetag: 03.12.2012
(51) Int. Cl.: B64D 9/00

(54) **Flugzeug mit einem Lift für das Verstauen von Frachtstücken**
Aircraft with an elevator for stowing cargo items
Avion doté d'un élévateur pour le rangement des pièces de cargaison

(30) Priorität: 08.12.2011 DE 102011056188; 16.12.2011 DE 102011056530; 10.01.2012 DE 102012100131
(43) Veröffentlichungstag der Anmeldung: 12.06.2013
(73) Patentinhaber: Telair International GmbH, 83714 Miesbach (DE)
(72) Erfinder: Huber, Thomas, 83727 Schliersee (DE); Holzner, Richard, 83071 Stephanskirchen (DE)
(74) Vertreter: Bohnenberger, Johannes

(56) Entgegenhaltungen:
- DE-A1-102006 022 144
- DE-A1-102009 012 998
- US-A1- 2007 284 481

## Beschreibung

Die Erfindung betrifft einen Lift für ein Flugzeug, einen Flugzeugabschnitt mit einem entsprechenden Lift und ein Verfahren für das Verstauen von Frachtstücken in einem Flugzeug.

Das effiziente Be- und Entladen von Flugzeugen ist seit jeher ein kritischer Vorgang. Die Betreiber von Großraumflugzeugen streben es an, diesen Vorgang derart zu optimieren, dass die diesbezüglich aufgewandte Zeit minimiert wird, um Kosten zu sparen. Andererseits führen Passagiere häufig zahlreiche und unterschiedliche Frachtstücke (z.B. Koffer) mit sich und wünschen sich einen sicheren Transport ihrer Frachtstücke.

Ein weiteres Problem, das beim Lufttransport von Frachtstücken für Passagiere auftritt, besteht darin, dass bereits das Aufgeben von Frachtstücken bei vielen Passagieren unerwünscht ist. So möchte der Passagier bevorzugt sämtliche Frachtstücke bzw. Gepäckstücke mit in den Passagierraum nehmen, um so auf diese Gepäckstücke jederzeit Zugriff zu haben. Ein langwieriges Aufgeben der Frachtstücke an einem Schalter kann dann entfallen. Ebenso ergibt sich für den Passagier der Vorteil, dass er beim Verlassen des Flugzeugs nicht darauf warten muss, bis sein Gepäck entladen und ihm letztendlich übergeben wird. Es zeichnet sich also ein Trend ab, bei dem mehr und mehr Frachtstücke in den Passagierraum mitgenommen werden. Bestehende Passagierräume verfügen jedoch häufig nicht über ausreichend Kapazität, um all diese Frachtstücke aufzunehmen. Selbst wenn die Frachtstücke durch das Vorsehen von ausreichendem Stauraum im Passagierraum aufgenommen werden können, ergeben sich nicht zuletzt für den Flugzeugbetreiber erhebliche Probleme. Zum einen muss das Gepäck sehr genau untersucht werden, um Gefahren auf Grund von Terroranschlägen zu vermeiden. Zum anderen kann ein unsachgemäßes Verstauen der Gepäckstücke bzw. Frachtstücke zu einer Verletzung der Passagiere führen. Letztendlich führt das Vorsehen von entsprechenden Stauräumen auch dazu, dass für den Passagier nur noch wenig Platz in dem Passagierraum verbleibt. Dies wirkt sich auf das Wohlbefinden des Passagiers häufig negativ aus.

Um diesen Problemen zumindest teilweise Rechnung zu tragen, schlägt die WO 2007/051593 vor, geeignete Frachtcontainer unmittelbar am Eingang des Flugzeugs vorzusehen, die von den Passagieren beladen werden können. Diese Frachtcontainer werden dann in den Frachtraum des Flugzeugs gebracht, im Flugzeug befördert und nach der Landung wieder derart aufgestellt, dass die Passagiere ihre eigenen Frachtstücke entnehmen können. Während des Fluges kann auf diese Frachtstücke jedoch nicht zugegriffen werden.

In der DE 10 2010 013 219 wird ein Frachtladesystem beschrieben, das ein Aufgeben und Abrufen von Frachtstücken in der Kabine ermöglicht. Das System ist aufwendig und der Abruf eines bestimmten Frachtstücks kann ggf. viel Zeit benötigen.

Die DE 10 2009 012 998 A1 zeigt eine ringförmige Fracht-Fördereinrichtung zur Aufbewahrung und Beförderung von Frachtstücken. Diese wird vorzugsweise für die Aufbewahrung und Zubereitung von Mahlzeiten verwendet. Die Fördereinrichtung hat zwei Ladeöffnungen, wobei eine der Öffnungen in den Passagierraum mündet und eine weitere von außen zugänglich ist.

Aus der US 2007/0284481 A1 ist ein Frachtladesystem bekannt, bei dem, wie exemplarisch in der Fig. 1 gezeigt, das Frachtladesystem ausschließlich in den Frachtraum eines Flugzeugs installiert ist. Der Passagier kann über eine Treppe in den Frachtraum hinabsteigen und dort sein Gepäckstück (beispielsweise einen Koffer) auf ein Frachtförderband legen. Dieses Frachtförderband kann das Gepäckstück zu einem weiteren Frachtförderband fördern, das das Gepäckstück übernimmt. Das Frachtladesystem ist derart ausgebildet, dass Gepäckstücke automatisch auf Plattformen positioniert werden, die ihrerseits wiederum entlang einer Ellipse parallel verschoben werden.

Aus der DE 10 2006 022 144 A1 ist ein Frachtladesystem bekannt, bei dem Frachtstücke über ein erstes Förderband bereitgestellt, über ein Aufzugsystem in die Überkopf-Kompartments des Passagierraums transportiert und dort über ein weiteres Förderband an einer geeigneten Position in Längsrichtung positioniert werden.

Ausgehend von der DE 10 2009 012 998 A1 ist ein Flugzeug mit einem verbesserten Liftsystem bereitzustellen, so dass ein komfortabler und effizienter Transport von Frachtstücken erfolgen kann. Des Weiteren soll der Be- und Entladevorgang des Frachtraums vereinfacht werden. Insgesamt soll es dem Passagier ermöglicht werden, seine Frachtstücke möglichst schnell und unkompliziert aufzugeben, wobei er auf diese jederzeit zugreifen kann.

Diese Aufgabe wird durch ein Flugzeug mit einem Lift gemäß Anspruch 1 gelöst. Es kann sich bei dem Führungsring um einen offenen oder geschlossenen Ring handeln. Beispielsweise kann sich der Ring über 45, 90, 100, 120, 180 (halboffen), 220, 270, 300 oder 360 (geschlossen) Grad erstrecken. Insofern könnte man auch von einem Führungsringabschnitt sprechen. Der Führungsring muss nicht zwangsläufig kreisförmig sein, sondern kann auch eine elliptische Form aufweisen oder jede andere Form mit einem oder mehreren gekrümmten Abschnitten umfassen. Demgemäß kann die Rotationsbewegung um mehrere parallel zueinander verlaufende Rotationsachsen erfolgen. Beispielsweise könnte der Führungsring auch eine im Wesentlichen rechteckige Ausgestaltung mit abgerundeten Ecken haben.

Der Lift hat mindestens einen ersten Führungsring bzw. einen ersten Führungsringabschnitt und mindestens einen zweiten Führungsring bzw. einen zweiten Führungsringabschnitt wobei das Aufnahmeabteil zwischen den Führungsringen in einer Kulissenführung angeordnet ist. Insofern ist es denkbar, die Führungsringe bzw. Führungsringabschnitte als einzelne Liftkabinen, die das Aufnahmeabteil ausbilden, zwischen den Führungsringen aufzuhängen.

Erfindungsgemäß ist eine Vielzahl von Förderkabinen bzw. Liftkabinen vorgesehen, die eine Kette ausbilden und in einer Rotationsbewegung um die Rotationsachse verschwenkbar sind. In diesem Ausführungsbeispiel ist es besonders vorteilhaft, wenn die Führungsringe eine Kulissenführung aufweisen.

Der Lift kann erfolgreich dazu eingesetzt werden, Frachtstücke im Passagierraum eines Flugzeugs aufzunehmen und bei Bedarf wieder bereitzustellen. Des Weiteren kann der Lift dazu eingesetzt werden, um die Frachtstücke zwischen voneinander abgetrennten Räumen, beispielsweise einem Passagierraum und einem Frachtraum, hin und her zu transportieren. Aufgrund der ringförmigen Ausbildung des Lifts kann dieser besonders effizient in ein Flugzeug, insbesondere nahe der Außenhaut des Flugzeugs, eingebaut werden, so dass der Innenraum des Flugzeugs gut ausgenutzt werden kann. Insbesondere ist es denkbar, den Lift zwischen den Spanten und/oder Frames anzubringen, die in herkömmlichen Flugzeugen als Stützkonstruktionen notwendig sind. Insofern können bisher ungenutzte Hohlräume für das Verstauen und Transportieren von Frachtstücken ausgenutzt werden. Mittels des erfindungsgemäßen Liftes ist es auch möglich, ungenutzte Hohlräume in der Bilge des Flugzeuges auszunutzen.

Das mindestens eine Aufnahmeabteil kann eine Abstellvorrichtung mit einer Abstellfläche aufweisen, die derart drehbeweglich im Aufnahmebereich angeordnet ist, dass sich die Abstellfläche unabhängig von der Position des Aufnahmeabteils relativ zum Führungsring parallel zu einem Passagier- und/oder Frachtdeck des Flugzeugs ausrichtet. Insofern wäre es möglich, in diesem Ring auch Essen, Trinken, Kaffeemaschinen, Öfen etc. zu verstauen, ohne dass die Gegenstände beim Verschieben der Aufnahmeabteile gekippt werden.

Der Lift kann derart ausgebildet sein, dass das mindestens eine Aufnahmeabteil in mindestens eine Aufnahmeposition gegenüber einer/der Öffnung zum Be- und/oder Entladen bringbar ist und das Aufnahmeabteil gegenüber der Aufnahmeposition um mindestens 45 Grad, insbesondere mindestens 90 Grad, insbesondere mindestens 120 Grad, insbesondere mindestens 160 Grad, insbesondere mindestens 180 Grad entlang des Führungsrings verschiebbar ist. Soweit man sich auf eine relativ geringe Gradzahl beim Verschieben des jeweiligen Aufnahmeabteils einlässt, wird es gewährleistet, dass eingebrachte Gegenstände nicht übermäßig gekippt werden. Insofern können beispielsweise auch Getränke, Essen oder sensible Geräte in den Aufnahmeabteilen angeordnet oder in diese integriert werden.

Der Lift kann eine Frachtverwaltungs-Einrichtung mit mindestens einer Eingabe-Einrichtung zur Erfassung eines vorzugsweise dem Frachtstück zugeordneten Codes aufweisen, wobei die Frachtverwaltungs-Einrichtung dazu ausgebildet ist, nach der Eingabe eines Codes, das dem Code zugehörige Frachtstück und/oder Aufnahmeabteil zu ermitteln und zumindest den Lift derart anzusteuern, dass das entsprechende Aufnahmeabteil in eine/die Aufnahmeposition zum Entladen des Aufnahmeabteils gebracht wird. Insofern ist es möglich, dass der Lift elektronisch gesteuert wird, wobei jeder Passagier selbstständig sein Frachtstück einstellen kann. Der Lift dient dann dazu, das Frachtstück entweder abzutransportieren oder so lange aufzubewahren, bis der Passagier das Frachtstück wieder abholt. Eine entsprechende Abholung kann beispielsweise dadurch erfolgen, dass der Passagier einen bestimmten Code eingibt, der entweder ihn selbst oder das Frachtstück oder das genutzte Aufnahmeabteil kennzeichnet.

Die Eingabe-Einrichtung kann eine Leseeinrichtung für eine vorzugsweise am oder im Frachtstück angeordnete Identifikations-Einrichtung, insbesondere einen Passivtransponder und/oder einen 2D- und/oder 3D-Code umfassen. Insofern kann der Lift eine dem Frachtstück zugeordnete Identifikationsnummer oder einen Identifikationscode selbstständig erfassen, ohne dass der Passagier diese eingeben muss. Das Wiederauffinden des Frachtstücks wird durch das automatische Erfassen dieser Identifikationsnummer bzw. dieses Identifikationscodes erleichtert.

Die Frachtverwaltungs-Einrichtung kann dazu ausgebildet sein, für ein in den Lift eingegebenes Frachtstück eine Korrelation zwischen einem/dem dem Frachtstück zugeordneten Code und dem Aufnahmeabteil des Frachtstücks und/oder eine Korrelation zwischen einem einem Passagier zugeordneten Code und dem Aufnahmeabteil zu speichern. Beispielsweise ist es dann möglich, dass die Frachtverwaltungs-Einrichtung nach der Eingabe eines dem Frachtstück zugeordneten Codes das entsprechende Aufnahmeabteil ermittelt und den Lift derart ansteuert, dass der Passagier Zugriff auf das entsprechende Aufnahmeabteil erhält.

Die genannte Aufgabe wird des Weiteren durch ein Flugzeug mit einem tonnenförmigen Flugzeugabschnitt gelöst, der einen Lift, wie dieser bereits beschrieben wurde, enthält. Der Lift kann ein integraler Bestandteil des Flugzeugabschnitts sein oder nachträglich in diesen eingebaut werden.

Vorzugsweise ist der Lift derart dimensioniert, dass er zwischen den Frames eines entsprechenden Flugzeugabschnitts eingepasst werden kann. Vorzugsweise verlaufen die Führungsringe parallel zu diesen Frames. Alternativ können die Frames Teile des Führungsrings oder den gesamten Führungsring ausbilden. Der Führungsring kann also als Führung für die einzelnen Aufnahmeabteile des Lifts sowie zur Versteifung der Flugzeugkonstruktion dienen.

Demgemäß kann die Rotationsachse des Lifts im Wesentlichen parallel zur Längsrichtung des Flugzeugs und/oder des Flugzeugabschnitts verlaufen.

Der Flugzeugabschnitt kann mindestens einen Roboter mit mindestens einem Roboterarm zur Aufnahme von Frachtstücken aus dem mindestens einen Aufnahmeabteil umfassen, wobei der Roboter vorzugsweise in einem/dem Frachtraum angeordnet ist. Insofern kann der Lift Frachtstücke aus dem Passagierraum im Frachtraum so bereitstellen, dass der Robotoer hierauf Zugriff erhält. Der Roboter kann erfindungsgemäß dazu eingesetzt werden, einzelne Frachtstücke in hierfür vorgesehene Aufbewahrungsbereiche oder Aufbewahrungsbehälter abzulegen.

Der Flugzeugabschnitt kann eine an der Deckenkonstruktion und/oder Wandkonstruktion befestigte Halte-Einrichtung, insbesondere mit mindestens einer Linearführung und eine Antriebseinheit zum Verfahren des an der Halte-Einrichtung befestigten Roboters, vorzugsweise entlang einer Längsachse des Flugzeugs, umfassen. Insofern kann sich der Roboter entlang der Längsrichtung des Flugzeugs bewegen und so die Frachtstücke über den gesamten Frachtraum verteilen. Der Roboterarm kann weitere Aufgaben beim Be- und Entladen von Frachtstücken übernehmen.

Der Roboter und/oder der Frachtraum des Flugzeugabschnitts können derart ausgebildet sein, wie dies in der deutschen Patentanmeldung mit dem Aktenzeichen 102011052299.9 beschrieben wird.

Nachfolgend wird die Erfindung mittels mehrerer Ausführungsbeispiele beschrieben, die anhand von Abbildungen näher erläutert werden. Hierbei zeigen:
- Fig. 1: eine schematische Außenansicht eines Flugzeugs;
- Fig. 2: einen Querschnitt durch den Rumpf des Flugzeugs aus Fig. 1 mit einem Lift zum Befördern von Frachtstücken aus dem Passagierraum in den Frachtraum;
- Fig. 3: eine perspektivische Ansicht auf einen Teilabschnitt des Rumpfes des Flugzeugs aus Fig. 1;
- Fig. 4: eine Detailansicht des Lifts aus Fig. 2;
- Fig. 5: die obere Liftöffnung des Lifts aus Fig. 4;
- Fig. 6: einen Schnitt durch den Lift aus Fig. 4;
- Fig. 7: einzelne Komponenten einer Frachtverwaltungs-Einrichtung zur Steuerung des Lifts;
- Fig. 8: einen Querschnitt durch den Rumpf eines Flugzeugs mit einem Lift zum Befördern von Frachtstücken in einem elliptischen Führungsring;
- Fig. 9: einen Querschnitt durch den Rumpf eines Großraumflugzeug mit einem Lift zum Befördern von Frachtstücken; und
- Fig. 10: einen Querschnitt durch den Rumpf eines Flugzeugs mit zwei Liften, einem ersten zum Befördern von Frachtstücken und einem zweiten zum Verschwenken von Küchenelementen.

Nachfolgend werden für gleiche und gleich wirkende Teile dieselben Bezugsziffern verwendet.

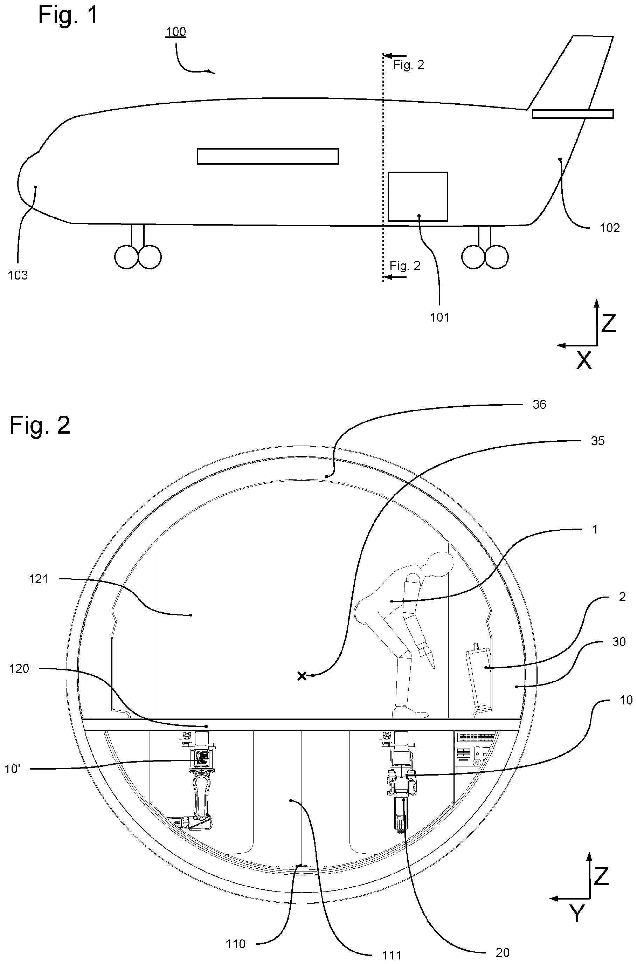

Fig. 1 zeigt eine Seitenansicht eines Flugzeugs 100. Das Flugzeug 100 erstreckt sich im Wesentlichen entlang einer Längsachse, nämlich der Flugzeuglängsrichtung X, wobei sich am vorderen Teil der Bug 103 und am hinteren Teil das Heck 102 befinden. Quer zur Flugzeuglängsrichtung X nach oben hin erstreckt sich die Z-Achse des Flugzeugs 100. An der Seite des Flugzeugs 100 befindet sich eine Ladeluke 101, über die Frachtstücke in das Flugzeug 100 eingeladen und aus diesem wieder ausgeladen werden können.

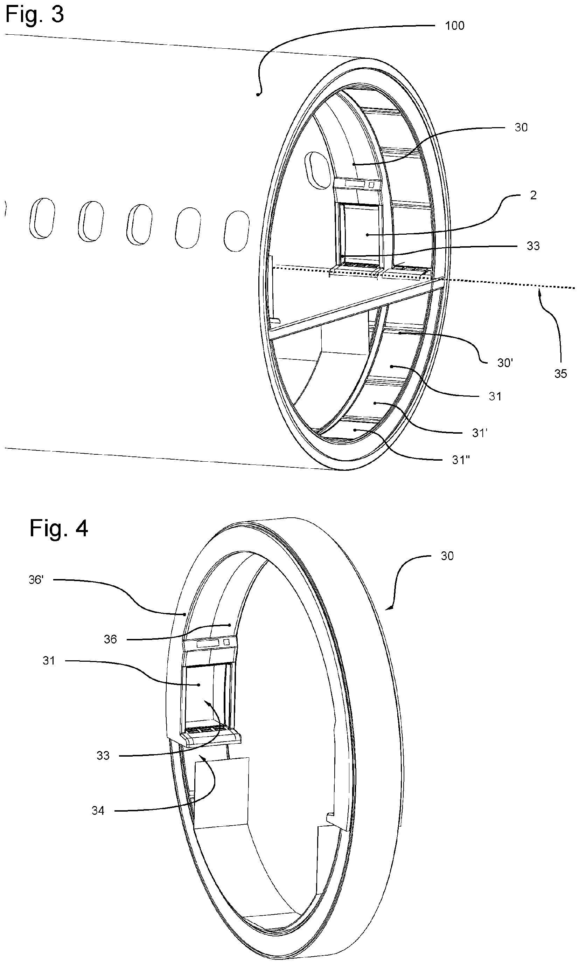

Fig. 2 zeigt einen Querschnitt durch das Flugzeug 100 aus Fig. 1. Der Flugzeugrumpf des Flugzeugs 100 ist im Wesentlichen kreisförmig um eine Rotationsachse 35 ausgebildet. Die Rotationsachse erstreckt sich im Wesentlichen parallel zur Flugzeuglängsrichtung X. Der Innenraum des Flugzeugs ist durch das Passagierdeck 120, das sich entlang der Flugzeuglängsrichtung X erstreckt, in einen Passagierraum 121 (oben) und einen Frachtraum 111 (unten) unterteilt. Der Flugzeugrumpf umfasst mehrere Lifte 30, 30', wie diese in Fig. 3 gezeigt sind. Fig. 2 zeigt eine Seitenansicht des ersten Lifts 30, der ringförmig entlang der Außenhaut des Flugzeugs 100 angeordnet ist und dazu dient, Frachtstücke, beispielsweise in Form von einem Koffer 2, zwischen dem Passagierraum 121 und dem Frachtraum 111 hin und her zu transportieren. Der Frachtraum wird nach unten hin durch das Frachtdeck 110 begrenzt. Im Frachtraum 111 befinden sich zwei Roboter 10, 10', die mit entsprechenden Roboterarmen 20 ausgestattet sind, um die durch den Lift 30 angelieferten Frachtstücke im Frachtraum 111 zu verstauen. Ebenso können auf Anforderung hin Frachtstücke aus dem Frachtraum 111 von den Robotern 10, 10' abgeholt, in den Lift 30 eingeladen und in den Passagierraum 121 transportiert werden.

Es ist denkbar, das Flugzeug 100 lediglich mit einem Lift 30 auszustatten. Andererseits können auch mehrere erfindungsgemäße Lifte in einem Flugzeug 100 vorgesehen werden, um einen schnelleren Transport der Koffer 2 der Passagiere 1 zu gewährleisten. Ein mit zwei Liften 30, 30' ausgestattetes Flugzeug 100 wird in Fig. 3 gezeigt. Die Lifte 30, 30' sind hier unmittelbar nebeneinander parallel zueinander verlaufend angeordnet. Es ist offensichtlich, dass die Lifte 30, 30' über eine Vielzahl von Liftkabinen 31, 31', 31" verfügen, die jeweils drehbeweglich um die Rotationsachse 35 verschwenkbar sind. Im Endeffekt bilden die einzelnen Liftkabinen 31, 31', 31" eine Kette, die entlang einer Kreisbahn bewegt werden kann.

Fig. 4 zeigt einen Flugzeugabschnitt, in den der Lift 30 integriert ist. Auf der Außenseite des Abschnitts befindet sich die Flugzeugaußenhaut, die jeweils von Frames, die ringförmig im Inneren des Flugzeugs 100 angeordnet sind, versteift werden. Diese Frames bilden einen ersten Führungsring 36 und einen zweiten Führungsring 36', zwischen denen die Kette der Liftkabinen 31, 31', 31" angeordnet sind. Die Führungsringe 36, 36' enthalten eine Kulissenführung, in die die einzelnen Liftkabinen 31, 31', 31" eingreifen, wobei die Kulissenführung derart ausgebildet ist, dass sich die Liftkabinen 31, 31', 31" entlang der durch die Führungsringe 36, 36' vorgegebenen Kreisbahn führen lassen.

Der Lift 30 hat eine obere Liftöffnung 33, die sich in das Innere des Passagierraums 121 erstreckt. Diese obere Liftöffnung 33 ermöglicht es den Passagieren 1 einzelne Liftkabinen 31, 31', 31" mit Koffern 2 zu beladen. Des Weiteren ist eine untere Liftöffnung 34 vorgesehen, die in den Frachtraum 111 mündet. Ein Abtransport der Koffer 2 und ein Verstauen dieser kann durch sich im Frachtraum 111 befindliches Personal erfolgen. In dem beschriebenen Ausführungsbeispiel wird diese Tätigkeit von den Robotern 10, 10' wahrgenommen.

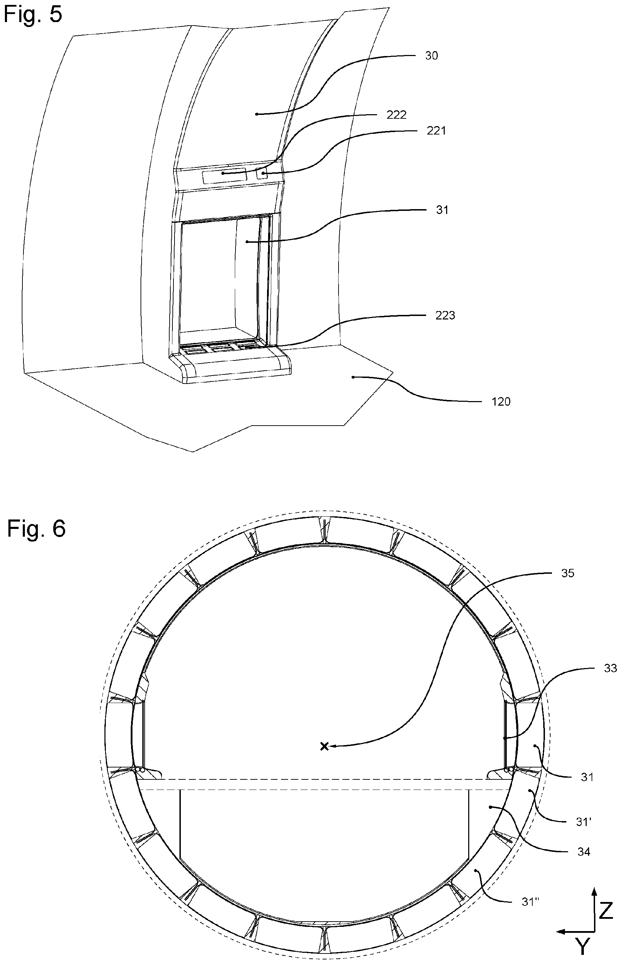

Fig. 5 zeigt eine Detailansicht der oberen Liftöffnung 33 des Lifts 30. Diese mündet, wie bereits erläutert, in den Passagierraum 121, so dass sich eine in einer Aufnahmeposition befindliche Liftkabine 31 leicht beladen lässt. Der Lift 30 verfügt des Weiteren über eine RFID-Leseeinrichtung 123, die beim Einlegen eines Koffers 2 in die Liftkabine 31 ein am Koffer befindliches RFID-Tag erfasst, so dass der Lift 30 weiß, welcher Koffer 2 sich in welcher Liftkabine 31, 31', 31" befindet. Des Weiteren ist eine Eingabe-Einrichtung 221 und eine Ausgabe-Einrichtung 222 vorgesehen, um eine Kommunikation mit dem Passagier 1 zu gewährleisten.

Fig. 6 zeigt einen Schnitt durch den ersten Lift 30, wobei die Vielzahl der Liftkabinen 31, 31', 31" zu erkennen sind. Wie bereits erläutert, bilden diese eine Kette, die drehbeweglich um die Rotationsachse 35 verfahren werden kann. Für die Bewegung dieser Kette sind entsprechende Aktuatoren bzw. Antriebseinheiten im Lift 30 vorgesehen. Anhand der Fig. 6 zeigt es sich des Weiteren, dass der Lift 30 über zwei obere Liftöffnungen 33 und zwei untere Liftöffnungen 34 verfügt, die jeweils spiegelsymmetrisch linksseitig und rechtsseitig des Flugzeugs 100 angeordnet sind. Insofern ist es möglich, Zugriff auf die Inhalte der einzelnen Liftkabinen über jede der beiden oberen Liftöffnungen 33 und unteren Liftöffnungen 34 zu erhalten.

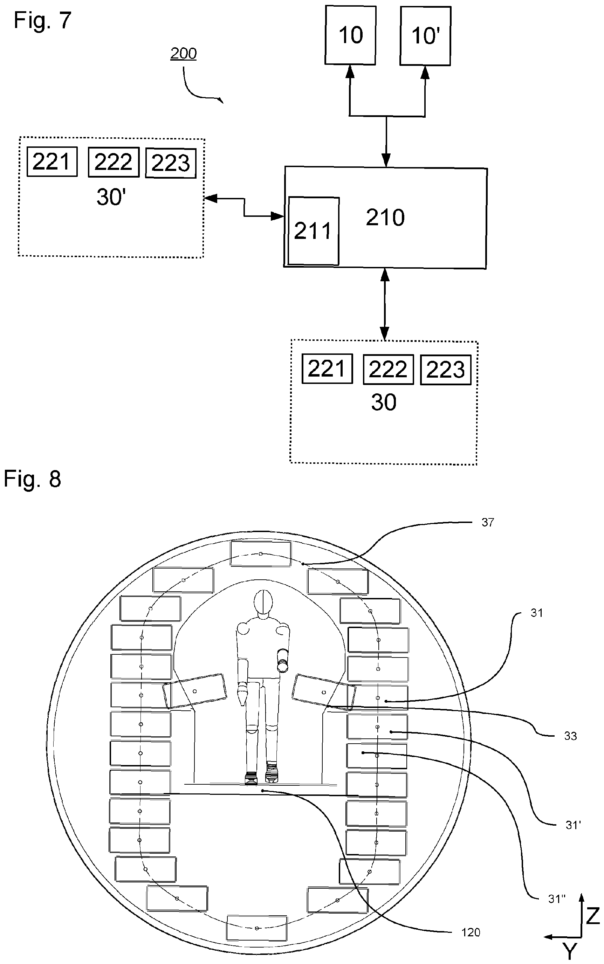

Die beschriebenen Be- und Entladevorgänge der Lifte 30, 30' können durch ein zentrales oder dezentrales Rechensystem implementiert werden. So kann das Flugzeug 100 eine Frachtverwaltungs-Einrichtung 200 mit einer SteuerEinrichtung 210 (vgl. Fig. 7) umfassen, die in kommunikativer Verbindung mit den Robotern 10, 10' und den Liften 30, 30' steht. Die Steuereinheit 210 steuert die Roboter 10, 10' ebenso wie den ersten Lift 30 und den zweiten Lift 30'. Unter anderem können Antriebseinheiten zum Verfahren der Roboter 10, 10' entlang der Längsrichtung des Flugzeuges 100 sowie Servomotoren zum Bewegen der Roboterarme 20 von der Steuereinheit 210 aktiviert werden. Auch Servomotoren für an den Roboterarmen 20 vorgesehene Werkzeuge können von der Steuereinheit 210 betätigt werden. Ebenso kommuniziert die Steuereinheit 210 mit den Liften 30, 30'. Diese umfassen in einem Ausführungsbeispiel jeweils eine Eingabe-Einrichtung 221, eine Ausgabe-Einrichtung 222 sowie eine RFID-Leseeinrichtung 223. Insofern ist es möglich, nach dem Abstellen eines Koffers 2 in einer Liftkabine 31, 31', 31" den weiteren Verladevorgang vollautomatisch zu gestalten. Des Weiteren kann der Passagier 1 anhand der Eingabe-Einrichtung 221 und der Ausgabe-Einrichtung 222 mit der Steuereinheit 210 kommunizieren und dieser mitteilen, dass er seinen Koffer 2 benötigt. Daraufhin steuert die Steuereinheit 210 die Roboter 10, 10' derart, dass der Koffer 2 aus dem Frachtraum in eine Liftkabine 31, 31', 31" verladen wird von einem der Lifte 30, 30' in den Passagierraum 121 befördert wird.

Der beschriebene Lift 30,30' kann auch ohne die Roboter 10, 10' eingesetzt werden, da er aufgrund der Vielzahl von Liftkabinen 31, 31', 31" eine Vielzahl von Staumöglichkeiten anbietet.

Des Weiteren sollte es offensichtlich sein, dass in den einzelnen Liftkabinen 31, 31', 31" nicht nur Koffer 2 aufbewahrt werden können, sondern auch Geräte, Getränke, Essen, usw.

In dem beschriebenen Ausführungsbeispiel umfasst der Lift 30 eine Kette von Liftkabinen 31, 31', 31", die jeweils ein quaderförmiges Aufnahmeabteil bereitstellen. Theoretisch ist es auch möglich, ein Führungsband vorzusehen, das umlaufend entlang der Außenhaut des Flugzeugs verläuft und Vorsprünge aufweist, die einzelne Aufnahmeabteile begrenzen. Insofern könnte das Förderband dazu eingesetzt werden, die Frachtstücke innerhalb eines ringförmig ausgebildeten Hohlraums oder Schachts zu transportieren.

In dem beschriebenen Ausführungsbeispiel sind die Lifte 30, 30' jeweils von innen, z.B. aus dem Passagierraum 121 und aus dem Frachtraum 111 erreichbar. Theoretisch wäre es jedoch auch möglich, eine Tür und/oder eine Luke am Flugzeug 100 vorzusehen, mittels derer es möglich ist, den Lift 30, 30', insbesondere die Liftkabinen 31, 31', 31" von außen zu beladen. Beispielsweise können hierfür entsprechende obere Liftöffnungen 33 und untere Liftöffnungen 34 vorgesehen werden, die an die Außenhaut des Flugzeugs 100 angebracht sind.

Wie bereits erläutert, ist es möglich, Führungsringe 36, 36' zu verwenden, die keine kreisrunde Ausgestaltung haben. Beispielsweise ist der Lift 30 gemäß Fig. 8 mit elliptischen Führungsringen 36, 36' bzw. mit Führungsringen 36, 36' in der Form eines Rechtecks mit abgerundeten Ecken ausgestattet.

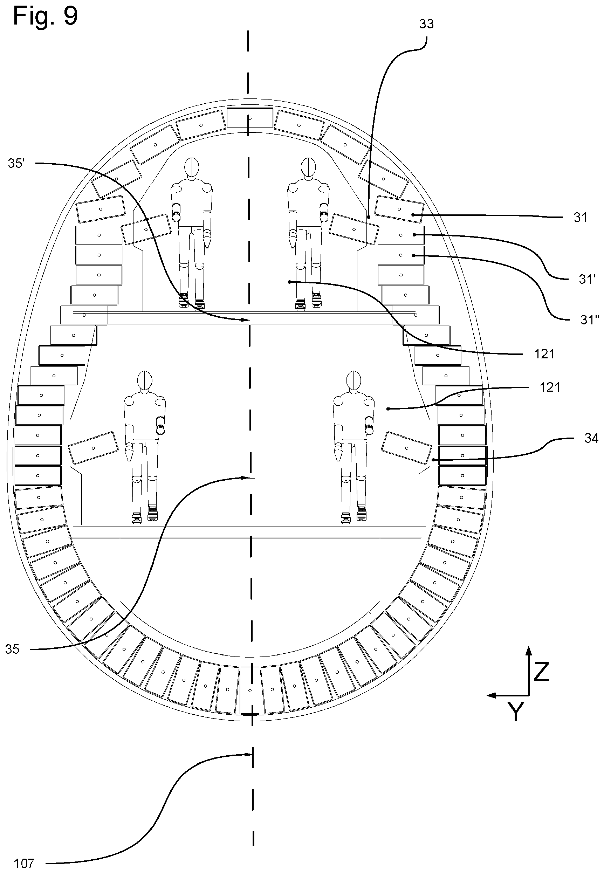

In der Fig. 9 sind die Führungsringe 36, 36' derart ausgebildet, dass sie im Wesentlichen die Verschmelzung von zwei Kreisen mit unterschiedlichen Radien wiedergeben. Die einzelnen Liftkabinen 31, 31', 31" rotieren in einem unteren Abschnitt des Flugzeugs 100 um eine erste Rotationsachse 35 und in einem oberen Abschnitt um eine zweite Rotationsachse 35'. Beide Rotationsachsen liegen auf einer Mittelebene 107 des Flugzeugs 100, die sich entlang der Längsrichtung (X-Richtung) und der Hochrichtung (Z-Richtung) erstreckt. Vorzugsweise teilt die Mittelebene 107 das Flugzeug 100 in zwei im wesentlichen symetrische Hälften. Theoretisch wäre es denkbar weitere Rotationsachsen 35, 35' vorzusehen, die Bewegungsbahn der Liftkabinen 31, 31', 31" und somit auch die Ausgestaltung der Führungsringe 36, 36' definieren.

Es sind zahlreiche andere Ausgestaltungen der Führungsringe 36, 36', sogar in "Hantelform", "Schneemann", usw. denkbar. In der Fig. 9 sind die Führungsringe 36, 36' beispielsweise an die Querschnittsform eines Großraumflugzeugs angepasst.

Des Weiteren unterscheiden sich die Ausführungsform gemäß der Fig. 8 von der gemäß Fig. 6 darin, dass die einzelnen Liftkabinen 31, 31', 31" derart gelenkig an einem Antriebsband 37 angeordnet sind, dass diese in jeder Position innerhalb der Führungsringe 36, 36' gleich ausgerichtet sind. Das heißt, die quaderförmigen Liftkabinen 31, 31', 31" erstrecken sich in jeder Position parallel zu dem Passagierdeck 120. Insofern wäre es denkbar, Geräte und/oder andere bezüglich deren Ausrichtung sensiblen Dinge in den einzelnen Liftkabinen 31, 31', 31" zu verstauen.

Des Weiteren ist es möglich, den erfindungsgemäßen Lift 30, 30' auch zur Verbindung von mehreren Passagierräumen 121 einzusetzen. Ein entsprechendes Ausführungsbeispiel ist in der Fig. 9 gezeigt. Hier weist ein erster und ein zweiter Passagierraum 121 jeweils paarweise angeordnete obere und untere Liftöffnungen 33, 34 auf. Weitere Liftöffnungen 33, 34 können im Frachtraum 11 vorgesehen werden.

Des Weiteren zeigt es sich anhand der Fig. 9, dass zahlreiche unterschiedliche Ansätze bezüglich der Führung der einzelnen Liftkabinen 31, 31', 31" denkbar sind. So werden gemäß diesem Ausführungsbeispiel die Liftkabinen 31, 31', 31" im unteren Bereich des Flugzeugs aufeinandergestapelt und rotieren um ihre Achse, während im oberen Bereich eine sequentielle Hintereinanderordnung erfolgt.

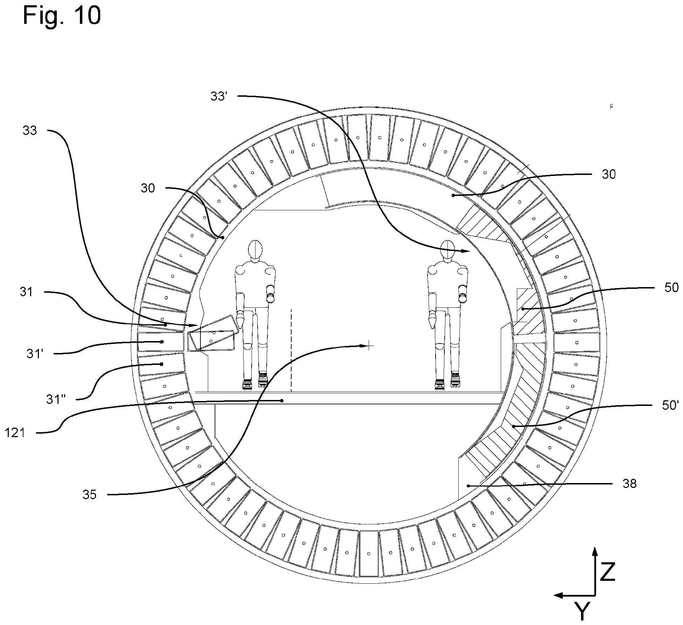

Fig. 10 zeigt ein Ausführungsbeispiel, bei dem ein zweiter Lift 30' innerhalb eines ersten Lift 30 angordnet ist. Der erste Lift 30 ähnelt dem aus Fig. 6, wobei jedoch die quaderförmigen Liftkabinen 31, 31', 31" radial zur Rotationsachse 33, nicht tangential (Fig. 6) ausgerichtet sind. Es gibt eine erste obere Liftöffnung 33, die ein Beladen des ersten Lifts 30 ermöglicht. Im Inneren der Führungsringe 36, 36 sind paarweise Führungsabschnitt 38 angeordnet, die sich über einen Winkel von ca. 180 Grad bezüglich der Rotationsachse 35 erstrecken. Die Führungsabschnitte 38 beherbergen, vorzugsweise in einer Kulissenführung ein einziges Abteil, das ein erstes Küchenelement 50 und ein zweites Küchenelement 50' enthält. Die Küchenelemente 50, 50' sind an die durch die Rotationsachse 35 vorgegebene Kreisbahn angepasst und sitzen mehr oder weniger aufeinander auf. Die Küchenelemente 50, 50' lassen sich um die Rotationsachse 35 verschwenken, so dass über eine zweite obere Liftöffnung 33' entweder das erste oder das zweite Küchenelement 50, 50' zugänglich ist. Insofern kann das Personal des Flugzeugs entweder auf das erste oder das zweite Küchenelement 50, 50' zugreifen.

Natürlich ist es möglich, den beschriebenen zweiten Lift 30' ohne den ersten Lift 30 einzusetzen. Des Weiteren ist es denkbar, den zweiten Lift 30' derart anzuordnen und auszubilden, dass sich die Küchenelemente 50, 50' vollständig versenken lassen. Abschnitte des oberen Küchenelements 50 können dann einen vorzugsweise begehbaren Teil des Passagierdecks 121 bilden.

### Bezugszeichenliste

- 1: Passagier
- 2: Koffer
- 10, 10': Roboter
- 20: Roboterarm
- 30, 30': Lift
- 31, 31', 31": Liftkabine
- 33: obere Liftöffnung
- 34: untere Liftöffnung
- 35, 35': Rotationsachse
- 36, 36': Führungsring
- 37: Antriebsband
- 38: Führungsringabschnitt
- 50, 50': Küchenelement
- 100: Flugzeug
- 101: Ladeluke
- 102: Heck
- 103: Bug
- 105: Flugzeugrumpf
- 107: Mittelebene
- 110: Frachtdeck
- 111: Frachtraum
- 120: Passagierdeck
- 121: Passagierraum
- 200: Frachtverwaltungs-Einrichtung
- 210: Steuereinheit
- 211: Speicher-Einrichtung
- 220: Frachtstückaufnahme-Einrichtung
- 221: Eingabe-Einrichtung
- 222: Ausgabe-Einrichtung
- 223: RFID-Leseeinrichtung

## Patentansprüche

1. Flugzeug mit einem Passagierraum (121), einem Frachtraum (111) und einem Lift, wobei der Lift umfasst:
- eine Vielzahl von Aufnahmeabteilen (31, 31', 31"), nämlich Liftkabinen, zur Aufnahme von Frachtstücken (2);
- mindestens eine erste Öffnung (33) und mindestens eine zweite Öffnung (34) zum Be- und/oder Entladen des Liftes (30), wobei die erste Öffnung (33) in einen Passagierraum (121) und die zweite Öffnung (34) in einen Frachtraum (111) mündet;
**gekennzeichnet durch**
- mindestens einen ersten Führungsringabschnitt oder Führungsring (36) und mindestens einen zweiten Führungsringabschnitt oder Führungsring (36'),
wobei die Aufnahmeabteile (31, 31', 31") zwischen den Führungsringabschnitten/ Führungsringen (36, 36') in einer Kulissenführung derart beweglich angeordnet sind, dass die Aufnahmeabteile (31, 31', 31") entlang des Führungsringabschnittes/Führungsrings (36, 36') in einer Rotationsbewegung um eine Rotationsachse (35, 35') verschiebbar sind, wobei die Aufnahmeabteile (31, 31', 31") eine Kette bilden und einzeln in die Kulissenführung eingreifen, die derart ausgebildet ist, dass sich die Aufnahmeabteile (31, 31', 31") entlang einer durch die Führungsabschnitte/Führungsringe (36, 36') vorgegebenen Kreisbahn führen lassen.

2. Flugzeug nach Anspruch 1,
**gekennzeichnet durch**
eine Frachtverwaltungs-Einrichtung (200) mit mindestens eine Eingabe-Einrichtung (221) zur Erfassung eines vorzugsweise dem Frachtstück (2) zugeordneten Codes,
wobei die Frachtverwaltungs-Einrichtung (200) dazu ausgebildet ist, nach der Eingabe eines Codes, das dem Code zugehörige Frachtstück (2) und/oder Aufnahmeabteil (31, 31', 31") zu ermitteln und zumindest den Lift derart anzusteuern, dass das entsprechende Aufnahmeabteil (31, 31', 31") in eine Aufnahmeposition zum Entladen des Aufnahmeabteils (31, 31', 31") gebracht wird.

3. Flugzeug nach Anspruch 2,
**dadurch gekennzeichnet, dass**
die Eingabe-Einrichtung (221, 223) eine Leseeinrichtung für eine vorzugsweise am oder im Frachtstück (2) angeordnete Identifikations-einrichtung, nämlich einen Passivtransponder und/oder einen 2D- und/oder 3D-Code, umfasst.

4. Flugzeug nach Anspruch 2 oder 3,
**dadurch gekennzeichnet, dass**
die Frachtverwaltungs-Einrichtung (200) dazu ausgebildet ist, für ein in den Lift (30, 30') eingegebenes Frachtstück (2) eine Korrelation zwischen einem/dem dem Frachtstück (2) zugeordneten Code und dem Aufnahmeabteil (31, 31', 31") des Frachtstücks (2) und/oder eine Korrelation zwischen einem einem Passagier zugordneten Code und dem Aufnahmeabteil (31, 31', 31") zu speichern.

5. Flugzeug nach einem der vorhergehenden Ansprüche,
**gekennzeichnet durch**
einen tonnenförmigen Flugzeugabschnitt.

6. Flugzeug nach Anspruch 5,
**dadurch gekennzeichnet, dass**
die Rotationsachse (35, 35') in einer Mittelebene (X-Z-Ebene) des Flugzeugs (100) liegt oder nahe der Mittelebene (X-Z-Ebene) parallel zur Längsrichtung des Flugzeugs (100) verläuft.

7. Flugzeug nach einem der Ansprüche 5 oder 6,
**gekennzeichnet durch**
mindestens einen Roboter (10, 10') mit mindestens einem Roboterarm (20) zur Aufnahme von Frachtstücken (2) aus dem mindestens einen Aufnahmeabteil (31, 31', 31"), wobei der Roboter in dem Frachtraum (111) angeordnet ist.

8. Flugzeug nach Anspruch 7,
**gekennzeichnet durch**:
- eine an einer Deckenkonstruktion und/oder Wandkonstruktion befestigte Halteeinrichtung mit mindestens einer Linearführung, und
- eine Antriebseinheit zum Verfahren des an der Halteeinrichtung befestigten Roboters (10, 10') entlang einer Längsachse des Flugzeugs (100).

## Claims

1. An aircraft with a passenger cabin (121), a freight space (111), and a lift, wherein the lift comprises:
- a plurality of receiving compartments (31, 31', 31"), namely lift cabins, for receiving cargo items (2);
- at least one first opening (33) and at least one second opening (34) for loading and/or unloading the lift (30), wherein the first opening (33) opens into the passenger space (121), and the second opening (34) opens into the freight space (111);
**characterized by**
- at least one first guide ring section or guide ring (36), and at least one second guide ring section or guide ring (36'),
wherein the receiving compartments (31, 31', 31") are arranged to be movable in a sliding guide between the guide ring sections/guide rings (36, 36') such that the receiving compartments (31, 31', 31") are displaceable along the guide ring section/guide ring (36, 36') in a rotational movement about an axis of rotation (35, 35'), wherein the receiving compartments (31, 31', 31") form a chain and individually engage into the sliding guide which is configured such that the receiving compartments (31, 31', 31") can be guided along a circular path defined by the guide ring sections/guide rings (36, 36').

2. The aircraft according to claim 1,
**characterized by**
a freight management device (200) with at least one input device (221) for acquiring a code preferentially allocated to the cargo item (2),
wherein the freight management device (200) is configured to determine, after the input of a code, the cargo item (2) associated with the code and/or the receiving compartment (31, 31', 31"), and to drive at least the lift in such a manner that the respective receiving compartment (31, 31', 31") is moved into a receiving position for unloading the receiving compartment (31, 31', 31").

3. The aircraft according to claim 2,
**characterized in that**
the input device (221, 223) comprises a reading device for an identification device preferentially arranged on or in the cargo item (2), namely a passive transponder and/or a 2D code and/or a 3D code.

4. The aircraft according to claim 2 or 3,
**characterized in that**
the freight management device (200) is configured to store for a cargo item (2) input into the lift (30, 30') a correlation between a/the code associated to the cargo item (2) and the receiving compartment (31, 31', 31") of the cargo item (2) and/or a correlation between a code allocated to a passenger and the receiving compartment (31, 31', 31").

5. The aircraft according to any one of the preceding claims, **characterized by**
a barrel-shaped aircraft section.

6. The aircraft according to claim 5,
**characterized in that**
the axis of rotation (35, 35') is in a middle plane (X-Z-plane) of the aircraft (100) or extends near the middle plane (X-Z-plane) in parallel to the aircraft's (100) longitudinal direction.

7. The aircraft according to any of claims 5 or 6,
**characterized by**
at least one robot (10, 10') with at least one robot arm (20) for taking up cargo items (2) from the at least one receiving compartment (31, 31', 31"), wherein the robot is arranged in the freight space (111).

8. The aircraft according to claim 7,
**characterized by**:
- a holding means having at least one linear guide and being attached to a ceiling construction and/or a wall construction, and
- a drive unit for displacing the robot (10, 10'), that is attached to the holding means, along a longitudinal axis of the aircraft (100).

## Revendications

1. Avion comportant une cabine de passagers (121), une soute (111) et un élévateur, l'élévateur comprenant :
- une multitude de compartiments de logement (31, 31', 31"), à savoir des cabines d'élévateur, destinés à loger des pièces de cargaison (2) ;
- au moins une première ouverture (33) et au moins une seconde ouverture (34) pour charger et/ou décharger l'élévateur (30), la première ouverture (33) débouchant dans une cabine de passagers (121) et la seconde ouverture (34) débouchant dans la soute (111) ;
**caractérisé par**
- au moins une première portion d'anneau de guidage ou un premier anneau de guidage (36) et au moins une seconde portion d'anneau de guidage ou un second anneau de guidage (36'),
les compartiments de logement (31, 31', 31 ") étant agencés de façon mobile entre les portions d'anneau de guidage / anneaux de guidage (36, 36') dans un guidage à coulisse de telle sorte que les compartiments de logement (31, 31', 31") sont déplaçables long d'une portion d'anneau de guidage / d'un anneau de guidage (36, 36') en un mouvement de rotation autour d'un axe de rotation (35, 35'), les compartiments de logement (31, 31', 31") formant une chaîne et venant s'engager individuellement dans le guidage à coulisse de telle sorte que les compartiments de logement (31, 31', 31") se laissent guider le long d'une trajectoire circulaire déterminée par les portions de guidage / anneaux de guidage (36, 36').

2. Avion selon la revendication 1,
**caractérisé par**
un dispositif d'administration de cargaison (200) comportant au moins un dispositif d'entrée (221) pour saisir un code de préférence associé à la pièce de cargaison (2),
le dispositif d'administration de cargaison (200) étant réalisé pour déterminer, une fois le code entré, la pièce de cargaison (2) associée au code et/ou le compartiment de logement (31, 31', 31") associé au code, et pour piloter ledit élévateur au moins de telle sorte que le compartiment de logement correspondant (31, 31', 31") est amené dans une position de réception pour décharger le compartiment de logement (31, 31', 31").

3. Avion selon la revendication 2,
**caractérisé en ce que** le dispositif d'entrée (221, 223) comprend un dispositif de lecture pour un dispositif d'identification disposé de préférence sur ou dans la pièce de cargaison (2), à savoir un transpondeur passif et/ou un code bidimensionnel et/ou tridimensionnel.

4. Avion selon la revendication 2 ou 3,
**caractérisé en ce que**
le dispositif d'administration de cargaison (200) est réalisé pour mémoriser, pour une pièce de cargaison (2) introduite dans l'élévateur (30, 30'), une corrélation entre un/le code associé à la pièce de cargaison (2) et le compartiment de logement (31, 31', 31") de la pièce de cargaison (2) et/ou une corrélation entre un code associé à un passager et le compartiment de logement (31, 31', 31 ").

5. Avion selon l'une des revendications précédentes,
**caractérisé par**
une portion d'avion en forme de tonneau.

6. Avion selon la revendication 5,
**caractérisé en ce que**
l'axe de rotation (35, 35') se trouve dans un plan médian (plan X-Z) de l'avion (100) ou à proximité du plan médian (plan X-Z) parallèlement à la direction longitudinale de l'avion (100).

7. Avion selon l'une des revendications 5 ou 6,
**caractérisé par**
au moins un robot (10, 10') comportant au moins un bras de robot (10) pour recevoir des pièces de cargaison (2) depuis ledit au moins un compartiment de logement (31, 31', 31 "), le robot étant agencé dans la soute (111).

8. Avion selon la revendication 7,
**caractérisé par**
- un dispositif de retenue fixé sur une structure de plafond et/ou une structure de paroi et comportant au moins un guidage linéaire, et
- une unité d'entraînement pour déplacer le robot (10, 10'), fixé sur le dispositif de retenue, le long d'un axe longitudinal de l'avion (100).
